(19) Europäisches Patentamt European Patent Office Office européen des brevets

(11) **EP 4 187 070 B1**

(12) **EUROPEAN PATENT SPECIFICATION**

(45) Date of publication and mention
of the grant of the patent:
**27.08.2025 Bulletin 2025/35**

(21) Application number: **21383076.3**

(22) Date of filing: **29.11.2021**

(51) International Patent Classification (IPC):
**F02C 3/22** *(2006.01)* **F02C 7/224** *(2006.01)*

(52) Cooperative Patent Classification (CPC):
**F02C 7/224; F02C 3/22;** F05D 2260/213;
Y02T 50/60

(54) **GAS TURBINE**

GASTURBINE

TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.05.2023 Bulletin 2023/22**

(73) Proprietor: **Airbus Operations, S.L.U.
28906 Getafe (Madrid) (ES)**

(72) Inventor: **SOTO CARRIL, Miguel Ángel
28906 Getafe, Madrid (ES)**

(74) Representative: **ABG Intellectual Property Law,
S.L.
Avenida de Burgos, 16D
Edificio Euromor
28036 Madrid (ES)**

(56) References cited:
**EP-A1- 3 623 604 WO-A2-2014/130117
GB-A- 2 240 813**

## Description

## TECHNICAL FIELD OF THE INVENTION

The present invention belongs to the field of gas turbine engines, specifically to the field of aeronautical gas turbine engines which make use of hydrogen as their fuel source.

The present system, involving a powered gas turbine engine, preferably hydrogen powered, overcomes the high headrise needed for the injection of fuel, such as fuel comprising hydrogen in the combustion chamber of a gas turbine engine.

The present invention is also related to an aircraft comprising such a system as well as to a method for providing a conditioned fuel, i.e. in a gaseous or supercritical state to the gas turbine engine by means of the mentioned system.

## BACKGROUND OF THE INVENTION

Currently, when referring to gas turbine engines, it is widely known in the present field of the technique that large high efficiency gas turbine engines for aviation have high pressure ratios, sometimes above 40:1, for example regarding the Jet A1 fuel, its injection in the combustion chamber needs to be performed at pressures beyond $5.516 \times 10^6$ Pa (800psi). In relation with this fact, reference is made to the fuel headrise needed for the injection into the combustion chamber of said engine.

Such a headrise is nowadays achieved by pumps, either positive displacement or velocity pumps, which are driven from engine accessory gearboxes and are connected to the engine turbine-compressor shafts, or even by pumps which are driven by electrical motors.

Currently, in connection with hydrogen powered gas turbine engines, the power required to increase the headrise of the fuel for injection in the combustion chamber becomes too high when compared to conventional aviation fuels, and this penalizes the use of hydrogen as a fuel for powering a gas turbine of the kind. Using conventional architectures to drive the pump via motion from the engine gearbox or by electrical motors will have engine performance penalties when using hydrogen as fuel beyond those engines for conventional fuels.

That is, hydrogen powered gas turbine engines require a higher power in order to be able to provide the fuel (hydrogen) to the combustion chamber of the engine, which penalizes the performance of the engine.

Several configurations for providing fuel to the engine, particularly by means of pumps for its injection in the combustion chamber of the engine, can be found in a different field of the technique, i.e. in connection with rocket engines. For example, the following documents describe known solutions.

Document US 2004/0177603 A1 discloses an expander cycle rocket engine with staged combustion and heat exchange.

Document US 2004/0148923 A1 discloses a diversion of combustion gas within a rocket engine to preheat fuel.

Document US 2010/0024386 A1 discloses a gas-generator augmented expander cycle rocket engine.

Document US 4998410 A discloses a hybrid staged combustion-expander topping cycle engine.

The aforementioned documents consider the use of a pump for the headrise of fuel for an engine (in these cases a rocket engine) in order to achieve the needed pressure for the injection of the fuel (hydrogen) in the combustion chamber of the engine.

However, in a gas turbine engine, particularly in a hydrogen powered gas turbine engine, the disclosed solutions of fuel headrise are not applicable, due to the major differences existing between gas turbine engines and rocket engines.

First of all, only those rocket engines of expander type are considered since only the expander uses heat picked up from the thrust chamber as the main energy source to drive the turbopump turbines. These expanders start by tank head idle combined with heat picked up at the combustion chamber, which suffers a problem: in this configuration where the pump is only driven by a turbopump turbine, the start-up of the engine, after a prior failed start, cannot be successful until said thrust chamber is warm, which implies a very high amount of time when compared to the time scale required for efficient aircraft operation.

Additionally, the thrust chamber has milled channels, or is made of tubes brazed together that form the combustion chamber, therefore the fuel flows along these channels or tubes and is heated by the thrust chamber. This solution implies high temperatures of the combustion gases in contrast with the low temperatures of the fuel, which cause very high thermal gradients through the thickness of the walls of the combustion chamber. Such a condition limits the engine life, and particularly the number of starts of the engine which can be performed. Thus, such a configuration is non-feasible for an aircraft turbine engine.

Moreover, a rocket engine has rotary parts only at the turbopump assembly. This implies that during the start-up of the engine, the turbopump acceleration needs to match with the engine acceleration. That also implies a problem when the engine is a gas turbine engine, given that the acceleration of an aircraft turbine engine during start is very slow as compared to the acceleration of a rocket engine.

Particularly, the turbine engine draws oxidizer (air) from ambient, while the rocket engine stores the oxidizer in a tank, which is thus a very different configuration of the engine and its elements.

Therefore, a hydrogen powered gas turbine engine needs additional power for the headrise of its fuel in order to achieve its functioning, while already known configurations have the drawback of a low efficiency.

Summing up, a rocket engine is a very different system when compared to an aircraft turbine engine, given that the principles of operation for both engines are highly different.

Document EP 3 623 604 A1 discloses a gas turbine engine system including a gas turbine engine and a fuel turbine system.

Document GB 2 240 813 A discloses an engine suitable for high speed comprising a turbojet having an air compressor, a combustor, a first turbine which drives the compressor and a jet pipe which terminates in a variable area nozzle.

## SUMMARY OF THE INVENTION

The present invention provides solution for the aforementioned problems, by a gas turbine engine according to claim 1, an aircraft according to claim 13 and a method for providing a conditioned fuel to a gas turbine engine according to claim 14. In dependent claims, preferred embodiments of the invention are defined.

In a first inventive aspect, the invention provides *a gas turbine main engine powered by a fuel, comprising:*

- *a combustion chamber configured to receive fuel through at least one injector,*
- *a turbopump comprising:*

  - *a pump,*
  - *an inlet for introducing the fuel in a first state into the pump,*
  - *a turbine,*
  - *an outlet for discharging the fuel in a second state from the turbine, the outlet (3.5) being fluidically connected to the combustion chamber (2) through the injector (2.1), and*
  - *a clutch further comprising a shaft,*

- *a heat exchanger comprising:*

  *an inlet, fluidically connected to the pump of the turbopump, and*
  *an outlet, fluidically connected to the turbine of the turbopump,*

  *the heat exchanger being configured for heating fuel in the first state, preferably liquid fuel, from the pump into fuel in the second state, preferably conditioned fuel, for the turbine,*

  *wherein the engine further comprises a bypass system fluidically connected with the outlet of the heat exchanger and the outlet of the turbopump, and wherein the shaft of the clutch is connected both to a main engine accessory gearbox and to a shaft of the turbopump.*

The fuel which powers the gas turbine engine enters the turbopump in a first state, preferably liquid, and exits such turbopump in a second state, preferably conditioned, i.e. supercritical and/or gaseous state. In a particular embodiment, the first state corresponds with a liquid state of the fuel whilst the second state corresponds with a conditioned state of the fuel.

The gas turbine engine thus can be powered by any fuel, although in a preferred embodiment the fuel may comprise a predetermined percentage of di-hydrogen ($H_2$) blended with other fuels. In a particular embodiment, the di-hydrogen ($H_2$) percentage of the fuel is 100%.

Throughout this document, when considering the embodiment of a fuel comprising a predetermined percentage of di-hydrogen ($H_2$), this fuel will be referred to as hydrogen.

In a particular embodiment, the fuel can comprise a predetermined percentage of methane.

A fuel with a certain percentage of hydrogen is preferred given that the high heat capacity at constant pressure of the liquid hydrogen portion of the fuel is an advantage over other liquid fuels since for a given heat exchange the temperature rise will be lower.

That is, a high heat capacity of the hydrogen portion of the fuel, combined with a good thermal conductivity and low viscosity in the case of liquid hydrogen makes this fuel as a preferred option for the transfer of energy in a heat exchanger, as well as for acquiring the required conditions for a better injection of the conditioned fuel into the combustion chamber.

The present gas turbine main engine provides energy to an aircraft, said main engine being a combustion engine. Particularly, the present gas turbine main engine comprises a combustion chamber, which receives the fuel, particularly fuel in the second state, thus preferably conditioned fuel, which is introduced into the combustion chamber through at least one injector. In a particular embodiment, such main engine comprises at least an air inlet, a fan, a compressor, a turbine and an exhaust for the exhaust gases.

Additionally, the present gas turbine main engine comprises an accessory gearbox, which further comprises corresponding drives for the different elements thereby connected.

As mentioned, the gas turbine engine is powered by a fuel in the second state, thus preferably a conditioned fuel, and particularly a fuel with a hydrogen portion, which is injected into the combustion chamber of the engine. However, the hydrogen portion of the fuel is stored in tanks in a liquid state. A device and method according the invention provides a solution to change its state along the path followed by the hydrogen throughout the engine.

Particularly, the gas turbine main engine comprises a turbopump, which further comprises a pump and a turbine. Additionally, the pump comprises an inlet for the turbopump, whereas the turbine comprises an outlet of the turbopump. This turbopump provides the necessary power to draw the fuel from its storage tank up to the combustion chamber, where it is injected and burned.

Throughout the present text, the term "headrise" corresponds to a value of a required pressure rise of the fuel to flow between the storing tanks and the combustion chamber in order to inject it into said combustion chamber in an adequate state for its use, such value being measured between the inlet and the outlet of the pump.

Particularly, the headrise value may be expressed as:

$$Headrise = \frac{Pressure\ rise}{Density * gravity\ (g)}$$

The low density of a liquid fuel requires a high headrise in order to inject said fuel in the combustion chamber, and thus requires high power to achieve a predetermined pressure rise. In particular, the hydrogen requires a much higher power compared to other fuels.

The gas turbine main engine further comprises a heat exchanger, having an inlet and an outlet for the fuel comprising hydrogen. Particularly, the inlet of the heat exchanger is fluidically connected with the pump of the turbopump, and therefore, fuel in a first state is pumped through the heat exchanger.

According to this configuration, the fuel in the first state, in a particular embodiment liquid fuel, enters the pump through the inlet, and is driven by the pump to the heat exchanger, where it is heated and changes state to the second state, in a particular embodiment a conditioned fuel, i.e. gaseous or supercritical fuel. The headrise of the fuel is obtained at the predetermined value by the combined effects of the pump and the heat harvested at the heat exchanger.

The pump is preferably a centrifugal pump.

The outlet of the heat exchanger is also fluidically connected to a bypass system, which allows the regulation of the fuel in the second state which is driven to the outlet of the turbopump, by bypassing the turbine of the turbopump and conducting at least part of the fuel in the second state directly to the combustion chamber through the at least one injector.

In a preferred embodiment, the bypass system comprises a flow control and check valve. Advantageously, the flow control and check valve can be regulated, and therefore the rate of fuel in the second state which bypasses the turbine is regulated by means of the open section of the flow control valve. That is, the bypass system regulates the percentage of fluid mass which bypasses the turbine of the turbopump. Moreover, the bypass system can further include a pressure regulator.

In a particular embodiment, the flow control valve is a three-way valve.

The combustion chamber receives the fuel in the second state to be injected therein from two different paths:

- the outlet of the turbopump, this portion of the fuel in the second state, particularly hydrogen, having thus followed a path in the heat exchanger and then an expansion in the turbine, and
- the bypass system, which derives the fuel in the second state directly from the heat exchanger outlet.

Both paths provide fuel in the second state to the combustion chamber, the bypass system arranging the feeding of fuel in the second state to the combustion chamber directly from the heat exchanger outlet.

That is, the bypass system is configured to regulate the power provided to the turbine of the turbopump, by means of the control of the flow of fuel in the second state in the turbine, according to the requirements of power of the main engine. Advantageously, the flow of fuel in the second state is regulated to provide the gas turbine main engine with a volume of fuel in the second state having the proper conditions to fulfill the engine requirements.

Thus, four different paths are provided for the fuel between its entry though the inlet of the turbopump into the pump and the combustion chamber, two of said paths being the following:

i) the fuel in the first state enters into the pump through the inlet of the turbopump, and is driven out of the pump and introduced into the heat exchanger, exiting the heat exchanger to be introduced into the turbine where it endures an expansion and powers the turbine, and out through the outlet of the turbopump in the second state, to be injected into the combustion chamber, or

ii) the fuel in the first state enters into the pump through the intlet of the turbopump, and is driven out of the pump and introduced into the heat exchanger, exiting the heat exchanger in the second state and driven to the bypass system which reintroduces the flow of fuel in the second state at the outlet of the turbopump in order to be injected into the combustion chamber.

The gas turbine main engine of the first inventive step further comprises a clutch with a shaft.

Said clutch is connected, by means of its shaft, to the shaft of the turbopump and to the main engine accessory gearbox, thus engaging the turbopump to the main engine accessory gearbox. Advantageously, this engagement synchronizes the turbopump shaft speed to the main engine speed during the start-up sequence of the system, when the starter turbine drives the main engine.

Thus, according to the mentioned configuration, once the fuel in the first state with a portion of hydrogen has entered the heat exchanger after the pump, harvests heat therein, and flows out of the heat exchanger in the second state.

Afterwards, the flow of fuel in the second state enters the turbine of the turbopump, wherein an expansion is produced. Said expansion allows powering the turbine and thus the pump at the start of the fuel cycle, and then flows to the at least one injector in order to be introduced into the combustion chamber.

The bypass system provides throttling of the gas turbine main engine and/or thrust control, as it regulates the turbopump turbine power by regulating the flow of fuel driven to the combustion chamber directly from the outlet of the heat exchanger, bypassing the turbine of the turbopump. Thus, the bypass system is a modulating system which regulates the flow of fuel which bypasses the turbine of the turbopump and therefore the flow of fuel fed to the turbine of the turbopump. The power delivered by the turbine regulates in turn the flow rate provided by the pump and the associated pressure of the fuel in the second state that flows into the combustion chamber of the gas turbine main engine. That is, the bypass system allows the control of the turbopump turbine power and hence the flow of fuel and the fuel headrise of the fuel in the first state at the pump of the turbopump.

It is to be noted that main engine speed or thrust overshoots during specific transient operations beyond predetermined levels can be controlled as well by this bypass system.

In a particular embodiment, the gas turbine main engine further comprises an exhaust port, the heat exchanger being located at said exhaust port. Particularly, the exhaust port is located in an exhaust section after the turbine, such turbine being located after the combustion chamber. Thus, the heat exchanger is located at the exhaust section.

That is, the heat exchanger is located where the exhaust gases of the combustion chamber are extracted. Therefore the headrise of the fuel in the first state is produced by the heat taken from said exhaust gases, which would otherwise be lost in the atmosphere when the exhaust gases are expulsed out of the engine.

Advantageously, the temperatures at the main engine exhaust section are much lower than at the combustion chamber, i.e. approximately 1400°C at the combustion chamber contrary to temperatures below 700°C at the exhaust section. Thus locating the heat exchanger in such point considerably reduces the thermal effects on the heat exchanger walls.

Moreover, this provides an increased overall engine system efficiency, particularly when compared to a pump which is driven either by a main engine accessory gearbox or by electrical motors which are fed by electrical energy from alternators as in both cases the mechanical energy of the main engine would be reduced by the energy necessary to power the pump.

Moreover, the high power required to increase the headrise of the mentioned fuel in the first state in order to enter into the combustion chamber at the required high pressures is provided by the heat exchange.

In a particular embodiment, the gas turbine main engine further comprises an exchanger bypass, located between the inlet and the outlet of the heat exchanger. Thus, the inlet of the exchanger bypass is located between the outlet of the pump of the turbopump and the inlet of the heat exchanger.

The exchanger bypass is configured to regulate the entry of fuel in the first state into the heat exchanger. That is, the exchanger bypass allows the control and regulation of the amount of fuel in the first state which enters the heat exchanger, particularly during the start-up sequence of the gas turbine main engine. That is, the fuel which bypasses the heat exchanger flows from the outlet of the pump of the turbopump directly to the inlet of the turbine of the turbopump.

Therefore, the exchanger bypass simultaneously allows the fuel to flow through the heat exchanger and through the turbine, this portion of the fuel bypassing the heat exchanger.

In a particular embodiment, the exchanger bypass comprises a bypass valve, preferably a modulating bypass valve. A preferred embodiment of such a modulating bypass valve is a three-way valve, although such modulating bypass valve can also be embodied as a T-duct and/or a two-way valve. Advantageously, the modulating bypass valve regulates the percentage of fluid mass bypassing the heat exchanger or flowing through the turbine, also regulating the caloric energy harvested from the heat exchanger due to the exhaust gases heat exchange. This allows the control of the pressure and temperature of the fuel and, potentially, the power generated by the turbine.

In a particular embodiment, the gas turbine main engine further comprises pressure regulating means configured to regulate the pressure of the fuel in the second state before entering into the combustion chamber through the at least one injector.

In a more particular embodiment, the pressure regulating means comprise a pressure regulator, a throttling element and/or a valve, or a combination thereof, particularly a flow control valve and a pressure regulator.

In a more particular embodiment, the pressure regulating means further comprise controlling means. In a particular embodiment, the pressure regulating means can be electronic, hydraulic or pneumatic actuated servo-valves.

That is, the pressure of the fuel flow is further regulated by means of the pressure regulating means before its entry into the combustion chamber, once the fuel is in the second state when exiting the heat exchanger, particularly when exiting from the outlet of the turbopump and before being injected by the at least one injector into the combustion chamber.

Such pressure regulation is advantageous, as it provides the required power to the conditioned fuel to be accurately injected into the combustion chamber due to its required pressure, thus increasing the efficiency of the combustion of the fuel produced inside the combustion chamber.

In a particular embodiment, the shaft of the clutch is coupled with a shaft of the main engine accessory gearbox. According to the invention, the main engine accessory gearbox is coupled to the main engine shaft, and is able to drive generators, lubricating oil pumps, hydraulic pumps (when present) and other devices required for the operation of said main engine and/or the vehicle comprising such main engine. Additionally, in a particular embodiment, the starter turbine is also coupled with the same main engine shaft by means of the main engine accessory gearbox.

This engagement between the shafts of the clutch and of the gas turbine main engine is advantageous, in particular in several phases, such as the start-up or other transient operating conditions of the engine. These transient operating conditions are highly eased by the engagement of the mentioned shafts.

Particularly, during the start-up sequence of the engine, a higher pressure of the conditioned fuel and thus a higher power in the fuel is required, given that the combustion engine when started is cold and cannot provide the required calorific power to the fuel. Such requirements can be fulfilled with the engagement of the turbopump and the gas turbine main engine through the accessory gearbox.

That is, during the start-up of the gas turbine main engine, said shafts are coupled and thus the pressure of the fuel is increased simultaneously with the gas turbine main engine speed, as the additional starter turbine drives the gas turbine main engine shaft. Particularly the fuel in the second state is arranged at the proper pressure level for injection and ignition inside the combustion chamber.

This allows solving the problem at the start-up transient conditions, achieving the start of the engine even after a failed start has ocurred. Advantageously, this provides a better synchronization between engine high pressure shaft speed, the turbopump speed and the fuel pressure rise.

During the mentioned start-up phase, the control of the flow of liquid fuel that passes through the heat exchanger is achieved by the exchanger bypass, when the shaft of the clutch of the turbopump engages the shaft of the engine accessory gearbox. In this instant, the exchanger bypass is open to reduce the pressure drop of the fuel, thus reducing the power demand of the pump of the turbopump.

During engine transients such as the one mentioned, power spikes produced at the turbine of the turbopump are controlled by the bypass system and by the exchanger bypass.

When the pressure and/or fuel flow and/or temperature at the outlet of the turbopump is below the required level by the gas turbine main engine, any of the flow regulation and control elements present in the bypass system and/or the exchanger bypass assist the system to meet the gas turbine main engine needs in terms of flow, pressure, temperature, etc.

For those transient conditions where additional power is needed at the turbopump to meet the gas turbine main engine needs wherein the bypass system and/or the exchanger bypass may not be sufficient, the shaft of the clutch engages the turbopump to the engine accessory gearbox to provide the gas turbine main engine with additional power.

This is advantageous for the functioning of the gas turbine main engine, as it provides of the required power at each of the functioning phases, depending on the power requirements of each of the mentioned phases.

In a particular embodiment, the heat exchanger of the gas turbine main engine is configured, in an operative manner, to modify the temperature (T) and pressure (p) of the fuel such that a phase transition from the first to the second state of said fuel, preferably from liquid to supercritical state, is performed.

Thus, the heat exchanger has two different aims. First of all, the heat exchanger provides the required energy to the fuel to power the turbopump turbine, whilst additionally heating the fuel so that after the turbopump turbine it is at the proper range of temperatures for injection into the combustion chamber.

That is, the fuel is provided in the first state to the heat exchanger, wherein heat is exchanged with said fuel in the first state thus achieving a change in its state, turning it into the second state, through the change of its parameters, such as temperature and/or pressure. Modifying such parameters implies the change of state of the fuel and its parameters when passing through the heat exchanger.

Particularly, in hydrogen engines the fuel in the second state is preferably in a gas or supercritical state for injection in the engine combustion chamber. Throughout this document, the terms "gaseous" and "supercritical" designations for the second state of the fuel, particularly hydrogen as fuel, are considered as equivalent, thus being a fuel in the second state a conditioned fuel in gaseous state which can be in a supercritical state.

That is, the main function of the heat exchanger is to transfer energy to the fuel in the first state for its subsequent expansion at the turbine of the turbopump, the heat exchanger providing the additional advantage of providing the heated fuel, preferably the heated portion of hydrogen in the fuel, at the adequate parameters for its injection in the combustion chamber as fuel in the second state.

In a particular embodiment, the turbine further comprises a plurality of nozzles configured to be oriented according to the requirements of power of the main engine.

Advantageously, variable angle nozzles at the turbine of the turbopump allow for operation with enhanced efficiencies on said turbine at two different conditions, such as the conditions required during the gas turbine main engine maximum thrust or during flying cruise speed. Particularly, the nozzles are located upstream of the turbine. The nozzles are elements of variable angle.

Thus, such a configuration of the turbine of the turbopump provides a high pressure ratio, which allows a better injection of the fuel in the second state into the combustion chamber. Said high pressure ratio is achieved by means of the fuel flow control and regulation from the turbopump and from the additional regulation systems such as the exchanger bypass or pressure regulation means when corresponding.

In a second inventive aspect, the invention provides an aircraft comprising a gas turbine main engine according to the first inventive aspect.

In a third inventive aspect, the invention furnishes a method for providing fuel in a second state, preferably conditioned fuel, to a gas turbine main engine according the first inventive aspect, comprising the following steps:

> a) providing a fuel in a first state to the pump of the turbopump and pumping said fuel in the first state to the heat exchanger, through the inlet of the heat exchanger,
> b) heating the fuel in the first state, preferably liquid fuel, such that a phase transition from the first state to the second state, preferably to supercritical state, is performed, obtaining a conditioned fuel,
> c) delivering the fuel in the second state from the outlet of the heat exchanger to:
>
> - the turbine and/or,
> - the outlet of the turbine through the bypass system,
>
> d) performing a pressure regulation of the fuel in the second state by the pressure regulating means,
> e) injecting the fuel in the second state from the outlet of the turbine to the combustion chamber through the at least one injector.

That is, the path performed by the fuel starts, in the first state conditions of the fuel, preferably in liquid phase, in the pump of the turbopump.

Said fuel in the first state is pumped from the pump to the heat exchanger, thus entering the heat exchanger through its inlet, wherein the fuel flow is heated. In the event that the heat exchanger is located at the exhaust port of the gas turbine main engine, the heating is produced with by means of the temperature exchange with the exhaust gases of the mentioned engine.

The fuel thus absorbs the heat provided by the heat exchanger and increases its temperature, thus performing a phase transition from the first state to the second state, preferably from liquid state to gaseous or supercritical state, wherein supercritical state provides a much lower viscosity of the fuel than the viscosity of the fuel in liquid state. Achieving a supercritical state in the fuel provides advantages, particularly for the hydrogen, providing better conditions for its injection and ignition.

Once the fuel is driven into the second state, the fuel flow (in the second state) is extracted from the heat exchanger through its outlet at step c) of the present method, thus following one of the aforementioned paths for the fuel, i.e. either entering the turbine of the turbopump and afterwards injected into the combustion chamber, or else incorporated into the path for its injection into the combustion chamber at the outlet of the turbopump after passing through the bypass system, which can regulate the flow of said fuel which exits the heat exchanger in the second state.

Before its injection in the combustion chamber in step e) of the present method, and after achieving its temperature requirements, the fuel flow in the second state is regulated at the pressure regulating means in order to achieve the pressure requirements for said injection into the combustion chamber through the at least one injector.

In a particular embodiment, during the start of the main engine, steps a) and b) are avoided by pumping the fuel in the first state directly to the outlet of the heat exchanger by means of the exchanger bypass.

That is, the exchanger bypass is configured such that the flow of fuel in the first state is directly driven to the outlet of the heat exchanger and into the inlet of the turbine of the turbopump, thus achieving its required conditions for being injected into the combustion chamber by additional means which may provide temperature and pressure conditions for the fuel in the first state. Particularly, the fuel in the second state, preferably the conditioned fuel with a portion of hydrogen, is injected in the starting phase of the main engine in a supercritical state, as well as vapor and liquid.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows a schematic view of an example of a gas turbine main engine.
Figure 2    This figure shows a general view of an additional example of a gas turbine main engine.

## DETAILED DESCRIPTION OF THE INVENTION

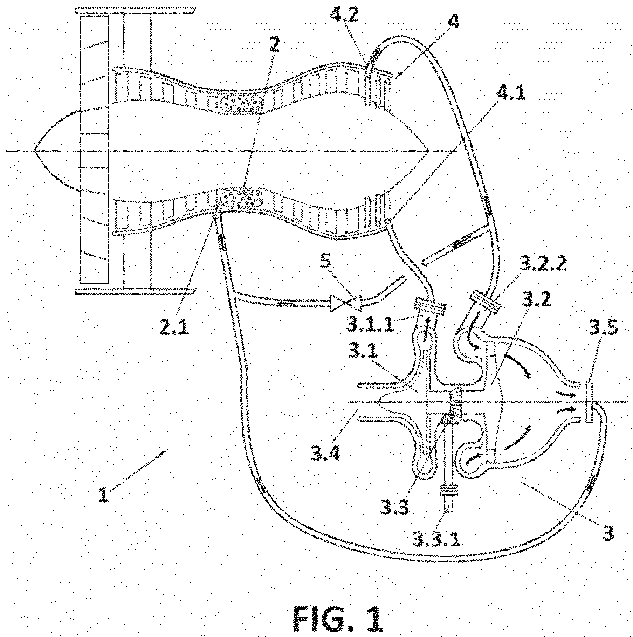

Figure 1 shows a schematic view of an example of a gas turbine main engine (1).

In particular, the engine (1) is a combustion engine having a combustion chamber (2) wherein the fuel is injected by means of an injector (2.1) for its ignition.

The exhaust gases from combustion chamber (2), once the fuel has been combusted inside the combustion chamber (2), are exhausted to the environment through an exhaust port. Such exhaust port is located at the exhaust section (not shown), thus located after the turbine (3.2), which is located immediately after the combustion chamber (2).

Immediately after such exhaust port, a heat exchanger (4) is located. Fuel in the first state passes through the heat exchanger (4), wherein a change of phase to the second state is achieved. The walls of the heat exchanger (4) are in thermal contact with the exhaust gases exiting from the combustion chamber (2) through the exhaust port, and the high temperatures of said exhaust gases provides a heat exchange with the fuel in the first state present inside the heat exchanger. Therefore, the fuel of the gas turbine main engine (1), which in this case is hydrogen, harvests heat from the exhaust gases and is thus heated up to the conditions in which it passes from the first to the second state.

The fuel, particularly hydrogen in a liquid state, is introduced in the pump (3.1) of a turbopump (3), which is fluidically connected with the combustion chamber (2).

Particularly, the liquid fuel (LF) is introduced in the pump (3.1) and driven to the heat exchanger (4), introducing the liquid fuel (LF) inside through the inlet (4.1) of the heat exchanger (4).

The liquid fuel (LF) is heated inside the heat exchanger (4) and leaves said heat exchanger (4) through its outlet (4.2) in a conditioned state, that is to say, as a conditioned fuel (CF) in a supercritical state, arriving at the turbine (3.2) of the turbopump (3).

The conditioned fuel (CF) exits the turbine (3.2) of the turbopump (3) through an outlet (3.5) of the turbopump (3), and is directed to the combustion chamber (2), entering the combustion chamber (2) through an injector (2.1) in the adequate conditions for its ignition, thus supplying the proper power to the engine (1).

The flow of conditioned fuel (CF) which arrives to the turbine (3.2) is regulated by means of the bypass system (5), which controls the flow of conditioned fuel (CF) that exits the heat exchanger (4) and enters the combustion chamber (2).

The path followed by the hydrogen, both in its liquid and conditioned states, is shown in present Figure 1.

In order to regulate and control said fuel flow, both in liquid and conditioned state, additional elements and systems can be introduced in the gas turbine main engine (1) shown in Figure 1.

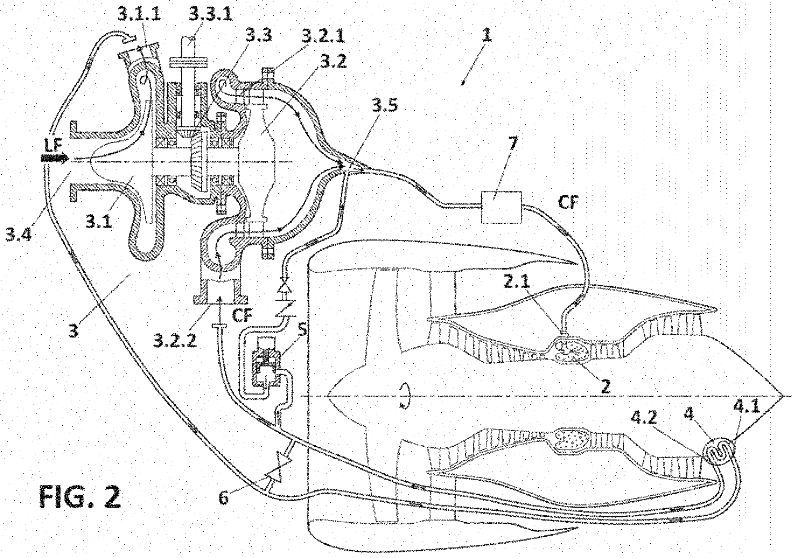

Thus, Figure 2 shows another example of gas turbine main engine (1), wherein the totality of the elements present in Figure 1 are also shown.

Additionally, pressure regulating means (7) have been introduced in the gas turbine main engine (1), located immediately before the injector (2.1).

That is, the conditioned fuel (CF) exits the turbine (3.2) through the outlet (3.5) and is directed to the pressure regulating means (7). The flow of conditioned fuel (CF) which comes directly from the bypass system (5) to the outlet (3.5) of the turbopump (3) is also directed, as a unique flow of conditioned fuel (CF) to the pressure regulating means (7), which adapt the pressure of the fuel to the requirements of the engine (1), in order to provide a better injection of the conditioned fuel (CF) inside the combustion chamber (2). Additionally, the turbine (3.2) comprises a plurality of nozzles (3.2.1) which are configured to be oriented according to the requirements of power of the main engine (1).

Moreover, an exchanger bypass (6) is shown between the inlet (4.1) and the outlet of the heat exchanger (4). Particularly, the exchanger bypass (6) is a modulating bypass valve, which inlet is located between the outlet (3.1.1) of the pump (3.1) and the inlet (4.1) of the heat exchanger (4).

The mentioned exchanger bypass (6) controls the flow of liquid fuel (LF) from the pump (3.1) to the heat exchanger (4.1), regulating the entry flow of liquid fuel inside the heat exchanger (4).

Thus, the exchanger bypass (6) allows a portion of the flow of liquid fuel to pass through the heat exchanger (4), thus receiving heat from it (particularly, heat exchanged from the exhaust gases), and changing its phase from liquid to supercritical state. The remaining portion of the liquid fuel (LF) coming from the pump (3.1) bypasses the heat exchanger (4) through the exchanger bypass (6), being directly diverted from the pump (3.1) either to the bypass system (5), which in turn diverts it to the outlet (3.5) of the turbopump (3), or to the inlet (3.2.2) of the turbine (3.2).

Although not shown in Figures 1 and 2, the bypass system (5) is configured by means of a flow control valve and a pressure regulator, whereas the exchanger bypass (6) is configured by a modulating bypass valve.

Although the mentioned elements are shown in the present combination in Figures 1 and 2, it is to be noted that any combination of the present referred elements is possible, wherein, for example, a combination of the exchanger bypass (6) with the elements and configuration shown in Figure 1 is possible, without introducing the pressure regulating means (7) and vice versa. That is, every referred element and system hereby forming part of any embodiment of the gas turbine main engine (1) is usable in any combination thereof.

*Example 1: state and temperature of the hydrogen fuel*

Regarding any of the aforementioned configurations of a gas turbine main engine (1), the systems are configured in order to fulfill the requirements of the mentioned engine (1).

According to such a configuration and the requirements to be fulfilled, the heat exchanger (4) can be sized in order to provide a preferred configuration of the system.

Regarding the embodiment shown in Figure 2, the heat exchanger (4) is sized for this application, providing a temperature of the conditioned hydrogen of 61K (gaseous hydrogen) at the outlet of the heat exchanger of the flow of fuel and 45K at the outlet of the turbine (3.2) of the turbopump (3) of the gaseous flow of hydrogen, said gaseous hydrogen being at a pressure of 4.23 MPa, which implies that the hydrogen is at a supercritical state at the turbine outlet. At this level of pressure (4.23MPa) the temperature at which the hydrogen is in liquid state is around 33K, so this means that the hydrogen in supercritical state is 12K above its liquid temperature. The shaft power at the turbopump (3) for this operating condition is 326KW, the turbine pressure ratio (from nozzle to rotor) is 1.66.

Special importance is drawn to target temperatures above the gas state of the fuel, in this case hydrogen, for its injection in the combustion chamber (2) of the engine (1), in order to improve the combustion process efficiency, as well as to provide a trade-off between supercritical injection of the hydrogen and gas injection of the hydrogen which can be made to choose the right temperature range of the fuel. That is, a trade-off between different temperature levels of the fuel is performed. Particularly, it has been proven that temperatures over 40K for the hydrogen at the outlet of the turbine (3.2) of the turbopump (3) provides an adequate ignition and provision of power to the engine (1).

For the hydrogen fuel to be in the corresponding temperature levels for a gas or supercritical state of such fuel at the injector (2.1), the heat exchanger (4) can also be sized to provide an increased power transfer to the fuel, by means of a coil cross section shape that increases the heat transfer per unit of length, additional coils, or other types of heat exchangers.

## Claims

1. Gas turbine main engine (1) powered by a fuel, comprising:

   - a combustion chamber (2) configured to receive fuel through at least one injector (2.1),
   - a turbopump (3) comprising:

     ◦ a pump (3.1),
     ◦ an inlet (3.4) for introducing the fuel in a first state into the pump (3.1),
     ◦ a turbine (3.2),
     ◦ an outlet (3.5) for discharging the fuel in a second state from the turbine (3.2), the outlet (3.5) being fluidically connected to the combustion chamber (2) through the injector (2.1), and
     ◦ a clutch (3.3) further comprising a shaft (3.3.1),

   - a heat exchanger (4) comprising:

     ◦ an inlet (4.1), fluidically connected to the pump (3.1) of the turbopump (3), and
     ◦ an outlet (4.2), fluidically connected to the turbine (3.2) of the turbopump (3),

   the heat exchanger (4) being configured for heating fuel in the first state, preferably liquid fuel (LF), from the pump (3.1) into fuel in the second state, preferably conditioned fuel (CF) for the turbine (3.2), and
   - a main engine accessory gearbox,
   wherein the engine (1) further comprises a bypass system (5) fluidically connected with the outlet (4.2) of the heat exchanger (4) and the outlet (3.5) of the turbopump (3), and
   wherein the shaft (3.3.1) of the clutch (3.3) is coupled both to the main engine accessory gearbox and to a shaft of the turbopump (3).

2. Gas turbine main engine (1) according to the previous claim further comprising an exhaust port, the heat exchanger (4) being located at said exhaust port.

3. Gas turbine main engine (1) according to any of the previous claims, further comprising an exchanger bypass (6), located between the inlet (4.1) and the outlet (4.2) of the heat exchanger (4).

4. Gas turbine main engine (1) according to any of the previous claims, further comprising pressure regulating means (7) configured to regulate the pressure of the fuel in the second state before entering into the combustion chamber (2) through the at least one injector (2.1).

5. Gas turbine main engine (1) according to the previous claim, wherein the pressure regulating means (7) comprise a pressure regulator, a throttling element and/or a valve, or a combination thereof.

6. Gas turbine main engine (1) according to any of claims 4 or 5, wherein the pressure regulating means (7) comprise a flow control valve and a pressure regulator.

7. Gas turbine main engine (1) according to any of claims 4 to 6, wherein the pressure regulating means (7) further comprise controlling means.

8. Gas turbine main engine (1) according to any of the previous claims, wherein the shaft (3.3.1) of the clutch (3.3) is coupled with a shaft of the main engine accessory gearbox.

9. Gas turbine main engine (1) according to any of the previous claims, wherein the heat exchanger (4) is configured, in an operative manner, to modify the temperature (T) and/or pressure (p) of the fuel such that a phase transition from the first state to the second state, preferably to supercritical state, is performed on the fuel.

10. Gas turbine main engine (1) according to any of the previous claims, wherein the fuel comprises hydrogen.

11. Gas turbine main engine (1) according to any of the previous claims, wherein the turbine (3.2) further comprises a plurality of nozzles (3.2.1) configured to be oriented according to the requirements of power of the main engine.

12. Gas turbine main engine (1) according to any of the previous claims, wherein the bypass system (5) is configured to regulate the flow of fuel in the second state according to the requirements of power of the main engine.

13. Aircraft comprising a gas turbine main engine (1) according to any of claims 1 to 12.

14. Method for providing fuel in a second state, preferably conditioned fuel (CF), to a gas turbine main engine (1) according to claim 4 or any of claims 1 to 12 and claim 4, comprising the following steps:

   a) providing a fuel in a first state, to the pump (3.1) of the turbopump (3) and pumping said fuel in the first state to the heat exchanger (4), through the inlet (4.1) of the heat exchanger (4),
   b) heating the fuel in the first state, preferably liquid fuel (LF), such that a phase transition from the first state to the second state, preferably to supercritical state, is performed, obtaining a conditioned fuel (CF),
   c) delivering the fuel in the second state, conditioned fuel (CF), from the outlet (4.2) of the heat exchanger (4) to:

      - the turbine (3.2) and/or,
      - the outlet (3.5) of the turbine (3.2) through the bypass system (5),

   d) performing a pressure regulation of the fuel in the second state by the pressure regulating means (7),
   e) injecting the fuel in the second state from the outlet (3.5) of the turbine (3.2) to the combustion chamber (2) through the at least one injector (2.1).

15. Method for providing fuel in a second state to a gas turbine main engine (1) according to the previous claim, wherein during the start of the main engine, steps a) and b) are avoided by pumping the fuel in the first state directly to the outlet (4.2) of the heat exchanger (4) by means of the exchanger bypass (6).

**Patentansprüche**

1. Gasturbinen-Haupttriebwerk (1), das durch einen Kraftstoff angetrieben wird, umfassend:

   - eine Brennkammer (2), die dazu ausgelegt ist, Kraftstoff durch mindestens einen Injektor (2.1) aufzunehmen,
   - eine Turbopumpe (3), umfassend:

      ∘ eine Pumpe (3.1),
      ∘ einen Einlass (3.4) zum Einleiten des Kraftstoffs in einem ersten Zustand in die Pumpe (3.1),
      ∘ eine Turbine (3.2),
      ∘ einen Auslass (3.5) zum Austragen des Kraftstoffs in einem zweiten Zustand aus der Turbine (3.2), wobei der Auslass (3.5) fluidisch über den Injektor (2.1) mit der Brennkammer (2) verbunden ist, und
      ∘ eine Kupplung (3.3), die ferner eine Welle (3.3.1) umfasst,

   - einen Wärmetauscher (4), umfassend:

      ∘ einen Einlass (4.1), der fluidisch mit der Pumpe (3.1) der Turbopumpe (3) verbunden ist, und
      ∘ einen Auslass (4.2), der fluidisch mit der Turbine (3.2) der Turbopumpe (3) verbunden ist,

   wobei der Wärmetauscher (4) dazu ausgelegt ist, Kraftstoff im ersten Zustand, vorzugsweise Flüssigkraftstoff (LF), aus der Pumpe (3.1) in Kraftstoff im zweiten Zustand, vorzugsweise konditionierten Kraftstoff (CF) für die Turbine (3.2), zu überführen, und
   - ein Haupttriebwerks-Nebenaggregategetriebe,

   wobei das Triebwerk (1) ferner ein Bypasssystem (5) umfasst, das fluidisch mit dem Auslass (4.2) des Wärmetauschers (4) und dem Auslass (3.5) der Turbopumpe (3) verbunden ist, und wobei die Welle (3.3.1) der Kupplung (3.3) sowohl mit dem Haupttriebwerks-Nebenaggregategetriebe als auch mit einer Welle der Turbopumpe (3) gekoppelt ist.

2. Gasturbinen-Haupttriebwerk (1) nach dem vorhergehenden Anspruch, ferner mit einem Abgasanschluss, wobei der Wärmetauscher (4) an diesem Abgasanschluss angeordnet ist.

**3.** Gasturbinen-Haupttriebwerk (1) nach einem der vorhergehenden Ansprüche, ferner mit einem Tauscher-Bypass (6), der zwischen dem Einlass (4.1) und dem Auslass (4.2) des Wärmetauschers (4) angeordnet ist.

**4.** Gasturbinen-Haupttriebwerk (1) nach einem der vorhergehenden Ansprüche, ferner mit Druckregelmitteln (7), die dazu ausgelegt sind, den Druck des Kraftstoffs im zweiten Zustand zu regeln, bevor dieser durch den mindestens einen Injektor (2.1) in die Brennkammer (2) eintritt.

**5.** Gasturbinen-Haupttriebwerk (1) nach dem vorhergehenden Anspruch, wobei die Druckregelmittel (7) einen Druckregler, ein Drosselelement und/oder ein Ventil oder eine Kombination davon umfassen.

**6.** Gasturbinen-Haupttriebwerk (1) nach einem der Ansprüche 4 oder 5, wobei die Druckregelmittel (7) ein Durchflussregelventil und einen Druckregler umfassen.

**7.** Gasturbinen-Haupttriebwerk (1) nach einem der Ansprüche 4 bis 6, wobei die Druckregelmittel (7) ferner Steuermittel umfassen.

**8.** Gasturbinen-Haupttriebwerk (1) nach einem der vorhergehenden Ansprüche, wobei die Welle (3.3.1) der Kupplung (3.3) mit einer Welle des Haupttriebwerks-Nebenaggregategetriebes gekoppelt ist.

**9.** Gasturbinen-Haupttriebwerk (1) nach einem der vorhergehenden Ansprüche, wobei der Wärmetauscher (4) betriebsfähig dazu ausgelegt ist, die Temperatur (T) und/oder den Druck (p) des Kraftstoffs derart zu verändern, dass ein Phasenübergang vom ersten in den zweiten Zustand, vorzugsweise in den überkritischen Zustand, am Kraftstoff durchgeführt wird.

**10.** Gasturbinen-Haupttriebwerk (1) nach einem der vorhergehenden Ansprüche, wobei der Kraftstoff Wasserstoff umfasst.

**11.** Gasturbinen-Haupttriebwerk (1) nach einem der vorhergehenden Ansprüche, wobei die Turbine (3.2) ferner eine Vielzahl von Düsen (3.2.1) umfasst, die dazu ausgelegt sind, entsprechend den Leistungsanforderungen des Haupttriebwerks ausgerichtet zu werden.

**12.** Gasturbinen-Haupttriebwerk (1) nach einem der vorhergehenden Ansprüche, wobei das Bypasssystem (5) dazu ausgelegt ist, den Durchfluss des Kraftstoffs im zweiten Zustand entsprechend den Leistungsanforderungen des Haupttriebwerks zu regeln.

**13.** Flugzeug, umfassend ein Gasturbinen-Haupttriebwerk (1) nach einem der Ansprüche 1 bis 12.

**14.** Verfahren zur Bereitstellung von Kraftstoff im zweiten Zustand, vorzugsweise konditioniertem Kraftstoff (CF), für ein Gasturbinen-Haupttriebwerk (1) nach Anspruch 4 oder nach einem der Ansprüche 1 bis 12 und Anspruch 4, umfassend die folgenden Schritte:

a) Bereitstellen eines Kraftstoffs im ersten Zustand an die Pumpe (3.1) der Turbopumpe (3) und Fördern des Kraftstoffs im ersten Zustand zum Wärmetauscher (4) durch den Einlass (4.1) des Wärmetauschers (4),
b) Erwärmen des Kraftstoffs im ersten Zustand, vorzugsweise Flüssigkraftstoff (LF), derart, dass ein Phasenübergang vom ersten in den zweiten Zustand, vorzugsweise in den überkritischen Zustand, durchgeführt wird, wodurch ein konditionierter Kraftstoff (CF) erhalten wird,
c) Fördern des Kraftstoffs im zweiten Zustand, konditionierten Kraftstoff (CF), vom Auslass (4.2) des Wärmetauschers (4) zu:

- der Turbine (3.2) und/oder
- dem Auslass (3.5) der Turbine (3.2) durch das Bypasssystem (5),

d) Durchführen einer Druckregelung des Kraftstoffs im zweiten Zustand durch die Druckregelmittel (7),
e) Einspritzen des Kraftstoffs im zweiten Zustand vom Auslass (3.5) der Turbine (3.2) in die Brennkammer (2) durch den mindestens einen Injektor (2.1).

**15.** Verfahren zur Bereitstellung von Kraftstoff im zweiten Zustand für ein Gasturbinen-Haupttriebwerk (1) nach dem vorhergehenden Anspruch, wobei während des Starts des Haupttriebwerks die Schritte a) und b) dadurch entfallen, dass der Kraftstoff im ersten Zustand direkt mittels des Tauscher-Bypasses (6) zum Auslass (4.2) des Wärmetauschers (4) gefördert wird.

## Revendications

**1.** Moteur principal à turbine à gaz (1) alimenté par un carburant, comprenant :

- une chambre de combustion (2) configurée pour recevoir du carburant par le biais d'au moins un injecteur (2.1),
- une turbopompe (3) comprenant :

○ une pompe (3.1),

○○ une entrée (3.4) pour introduire le carburant dans un premier état dans la pompe (3.1),

○ une turbine (3.2),

○ une sortie (3.5) pour rejeter le carburant dans un second état hors de la turbine (3.2), la sortie (3.5) étant reliée fluidiquement à la chambre de combustion (2) par l'intermédiaire de l'injecteur (2.1), et

○ un embrayage (3.3) comprenant en outre un arbre (3.3.1),

- un échangeur de chaleur (4) comprenant :

○ une entrée (4.1), reliée fluidiquement à la pompe (3.1) de la turbopompe (3), et

○ une sortie (4.2), reliée fluidiquement à la turbine (3.2) de la turbopompe (3),

l'échangeur de chaleur (4) étant configuré pour chauffer du carburant dans le premier état, de préférence du carburant liquide (LF) provenant de la pompe (3.1), pour produire un carburant dans le second état, de préférence du carburant conditionné (CF) pour la turbine (3.2), et

- un boîtier d'accessoires de moteur principal, dans lequel le moteur (1) comprend en outre un système de dérivation (5) relié fluidiquement à la sortie (4.2) de l'échangeur de chaleur (4) et à la sortie (3.5) de la turbopompe (3), et dans lequel l'arbre (3.3.1) de l'embrayage (3.3) est accouplé à la fois au boîtier d'accessoires de moteur principal et à un arbre de la turbopompe (3).

2. Moteur principal à turbine à gaz (1) selon la revendication précédente, comprenant en outre un orifice d'échappement, l'échangeur de chaleur (4) étant situé au niveau dudit orifice d'échappement.

3. Moteur principal à turbine à gaz (1) selon l'une quelconque des revendications précédentes, comprenant en outre un dispositif de dérivation d'échangeur (6), situé entre l'entrée (4.1) et la sortie (4.2) de l'échangeur de chaleur (4).

4. Moteur principal à turbine à gaz (1) selon l'une quelconque des revendications précédentes, comprenant en outre un moyen de régulation de pression (7) configuré pour réguler la pression du carburant dans le second état avant qu'il entre dans la chambre de combustion (2) par l'intermédiaire de l'au moins un injecteur (2.1).

5. Moteur principal à turbine à gaz (1) selon la revendication précédente, dans lequel le moyen de régulation de pression (7) comprend un régulateur de pression, un élément d'étranglement et/ou une vanne, ou une combinaison de ceux-ci.

6. Moteur principal à turbine à gaz (1) selon l'une quelconque des revendications 4 et 5, dans lequel le moyen de régulation de pression (7) comprend une vanne de régulation de débit et un régulateur de pression.

7. Moteur principal à turbine à gaz (1) selon l'une quelconque des revendications 4 à 6, dans lequel le moyen de régulation de pression (7) comprend en outre un moyen de commande.

8. Moteur principal à turbine à gaz (1) selon l'une quelconque des revendications précédentes, dans lequel l'arbre (3.3.1) de l'embrayage (3.3) est accouplé à un arbre du boîtier d'accessoires de moteur principal.

9. Moteur principal à turbine à gaz (1) selon l'une quelconque des revendications précédentes, dans lequel l'échangeur de chaleur (4) est configuré, de manière fonctionnelle, pour modifier la température (T) et/ou la pression (p) du carburant de telle sorte qu'une transition de phase du carburant du premier état au second état, de préférence à l'état supercritique, soit produite.

10. Moteur principal à turbine à gaz (1) selon l'une quelconque des revendications précédentes, dans lequel le carburant comprend de l'hydrogène.

11. Moteur principal à turbine à gaz (1) selon l'une quelconque des revendications précédentes, dans lequel la turbine (3.2) comprend en outre une pluralité d'ailettes (3.2.1) configurées pour être orientées selon les exigences de puissance du moteur principal.

12. Moteur principal à turbine à gaz (1) selon l'une quelconque des revendications précédentes, dans lequel le système de dérivation (5) est configuré pour réguler l'écoulement de carburant dans le second état selon les exigences de puissance du moteur principal.

13. Aéronef comprenant un moteur principal à turbine à gaz (1) selon l'une quelconque des revendications 1 à 12.

14. Procédé pour fournir du carburant dans un second état, de préférence du carburant conditionné (CF), à un moteur principal à turbine à gaz (1) selon la revendication 4 ou l'une quelconque des revendications 1 à 12 et la revendication 4, comprenant les étapes suivantes :

a) fournir un carburant dans un premier état à la pompe (3.1) de la turbopompe (3) et pomper ledit carburant dans le premier état vers l'échangeur de chaleur (4), par l'entrée (4.1) de l'échangeur de chaleur (4),

b) chauffer le carburant dans le premier état, de préférence du carburant liquide (LF), de sorte qu'une transition de phase du premier état au second état, de préférence à l'état supercritique, soit produite, ce qui permet d'obtenir un carburant conditionné (CF),

c) acheminer le carburant dans le second état, carburant conditionné (CF), de la sortie (4.2) de l'échangeur de chaleur (4) vers :

- la turbine (3.2) et/ou
- la sortie (3.5) de la turbine (3.2) par le biais du système de dérivation (5),

d) effectuer une régulation de pression du carburant dans le second état par le biais du moyen de régulation de pression (7),

e) injecter le carburant dans le second état depuis la sortie (3.5) de la turbine (3.2) vers la chambre de combustion (2) par l'intermédiaire de l'au moins un injecteur (2.1).

15. Procédé pour fournir du carburant dans un second état à un moteur principal à turbine à gaz (1) selon la revendication précédente, dans lequel, pendant le démarrage du moteur principal, les étapes a) et b) sont évitées en pompant le carburant dans le premier état directement vers la sortie (4.2) de l'échangeur de chaleur (4) au moyen du dispositif de dérivation d'échangeur (6).

FIG. 1

FIG. 2

EP 4 187 070 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040177603 A1
- US 20040148923 A1
- US 20100024386 A1
- US 4998410 A
- EP 3623604 A1
- GB 2240813 A